# EUROPEAN PATENT APPLICATION

(11) **EP 4 108 113 A1**
(43) Date of publication of application: **28.12.2022**
(21) Application number: 20920337.1
(22) Date of filing: 19.02.2020
(51) Int. Cl.: A24F 47/00, H04M 1/00, H04M 11/00, G06Q 50/10

(54) **INFORMATION PROCESSING DEVICE, IMAGE PROCESSING METHOD, AND PROGRAM**

(71) Applicant: Japan Tobacco Inc., Tokyo 105-6927 (JP)
(72) Inventor: HARA, Kenta, Tokyo 130-8603 (JP); MIKI, Hayata, Tokyo 130-8603 (JP)
(74) Representative: Hoffmann Eitle
(86) International application number: PCT/JP2020/006492
(87) International publication number: WO 2021/166113

(57) **Abstract**

This information processing device is provided with: a collection unit which collects, on the basis of activations of flavor suction tools, information about the locations of user terminals respectively connected to the flavor suction tools which the locations of all or some of the user terminals are indicated in an identifiable mode; a determination unit which determines whether it is suitable to present, as use areas of the flavor suction tools, the respective one or more areas in which the user terminals are located in the user location map; and a second creation unit which creates a determination result map in which the area determined to be suitable to be presented as the use area of the flavor suction tool is indicated in the identifiable mode.

## Description

### FIELD

The present invention relates to an information processing device, an information processing method, and a program.

### BACKGROUND

In recent years, a technique for displaying, on a map, locations in which smoking is permitted has been developed.

For example, Patent Document 1 discloses the association of geographical position information on locations in which smoking is permitted with electronic map data, searching for locations in which smoking is permitted within a certain distance from the position of the user, and transmitting the result of the search to the user's terminal.

Also, Patent Document 2 discloses the recording of Global Positioning System (GPS) coordinates in response to detecting vaping actions of a plurality of electronic vaporizing systems, and displaying, on a map, the recorded GPS coordinates as a heat map.

### CITATION LIST

### PATENT LITERATURE

Patent Document 1: Jpn. Pat. Appln. KOKAI Publication No. 2008-59382
Patent Document 2: Jpn. PCT National Publication No. 2019-500006

### SUMMARY

### TECHNICAL PROBLEM

In Patent Document 1, to acquire geographical position information on locations in which smoking is permitted, it is necessary to set a smoking-side terminal for each such location. Thus, Patent Document 1 entails the problem of costs being incurred for the setting of the smoking-side terminal.

In Patent Document 2, locations in which a large number of vaping actions has been detected are presented as a heat map to allow users to recognize popular spots for vaping. However, in Patent Document 2, there is a possibility that the locations in which a large number of vaping actions has been detected are not necessarily locations in which all users are free to vape, possibly causing inappropriate locations to be presented. For example, in Patent Document 2, there is a possibility that a location in which only limited people can enter and exit, such as the premises of a company, may be presented.

In view of the above problems, it is therefore an object of the present invention to provide a technique capable of appropriately presenting an area in which a flavor inhaler can be used, while suppressing an increase in cost.

### SOLUTION TO PROBLEM

An information processing device according to an aspect of the present invention includes: a collection unit configured to collect, based on each of a plurality of flavor inhalers being activated, position information on a plurality of user terminals respectively connected to the flavor inhalers; a first creation unit configured to create, based on the position information, a user position map indicating positions of some or all of the user terminals in an identifiable manner; a determination unit configured to determine whether or not each of one or more areas in which user terminals are positioned is appropriate for presentation as an available area for flavor inhalers on the user position map; and a second creation unit configured to create a determination result map indicating, in an identifiable manner, an area determined as appropriate for presentation as an available area for flavor inhalers.

An information processing method according to an aspect of the present invention includes: a collection step of collecting, based on each of a plurality of flavor inhalers being activated, position information on a plurality of user terminals respectively connected to the flavor inhalers; a first creation step of creating, based on the position information, a user position map indicating some or all of the user terminals in an identifiable manner; a determination step of determining whether or not each of one or more areas in which user terminals are positioned is appropriate for presentation as an available area for flavor inhalers on the user position map; and a second creation step of creating a determination result map indicating, in an identifiable manner, an area determined as appropriate for presentation as an available area for the flavor inhalers.

A program according to an aspect of the present invention causes a computer to realize: a collection unit configured to collect, based on each of a plurality of flavor inhalers being activated, position information on a plurality of user terminals respectively connected to the flavor inhalers; a first creation unit configured to create, based on the position information, a user position map indicating some or all of the user terminals in an identifiable manner; a determination unit configured to determine whether or not each of one or more areas in which user terminals are positioned is appropriate for presentation as an available area for flavor inhalers, on the user position map; and a second creation unit configured to create a determination result map indicating, in an identifiable manner, an area determined as appropriate for presentation as an available area for flavor inhalers.

In the present invention, the "unit" or "device" does not simply refer to a physical means, but encompasses a case where functions equipped in the "unit" or "device" are implemented by software. The functions equipped in a single "unit" or "device" may be implemented by two or more physical means or devices, and the functions of two or more "units" or "devices" may be implemented by a single physical means or device.

### ADVANTAGEOUS EFFECTS OF INVENTION

According to the present invention, it is possible to provide a technique capable of appropriately presenting an area in which a flavor inhaler can be used, while suppressing an increase in cost.

### BRIEF DESCRIPTION OF THE DRAWINGS

FIG. 1 is a block diagram schematically showing a configuration example of an information distribution system according to an embodiment of the present invention.
FIG. 2 is a schematic diagram schematically showing a first configuration example of the inhaling device according to the embodiment of the present invention.
FIG. 3 is a schematic diagram schematically showing a second configuration example of the inhaling device according to the embodiment of the present invention.
FIG. 4 is a block diagram schematically showing a configuration example of a user terminal according to the embodiment of the present invention.
FIG. 5 is a block diagram schematically showing a configuration example of an information processing server according to the embodiment of the present invention.
FIG. 6 is a diagram schematically showing a configuration example of a log information DB according to the embodiment of the present invention.
FIG. 7 is a diagram schematically showing a configuration example of a permission area map according to the embodiment of the present invention.
FIG. 8 is a diagram schematically showing a configuration example of a user position map according to the embodiment of the present invention.
FIG. 9 is a diagram schematically showing a configuration example of a determination result map according to the embodiment of the present invention.
FIG. 10 is a flowchart showing an example of processing by the information processing server according to the embodiment of the present invention.

### DETAILED DESCRIPTION

Hereinafter, an aspect of an embodiment of the present invention will be described with reference to the accompanying drawings. In the drawings, the same constituent elements will be assigned identical reference symbols where possible, and redundant descriptions will be omitted.

### << 1. Configuration Example of Information Distribution System>>

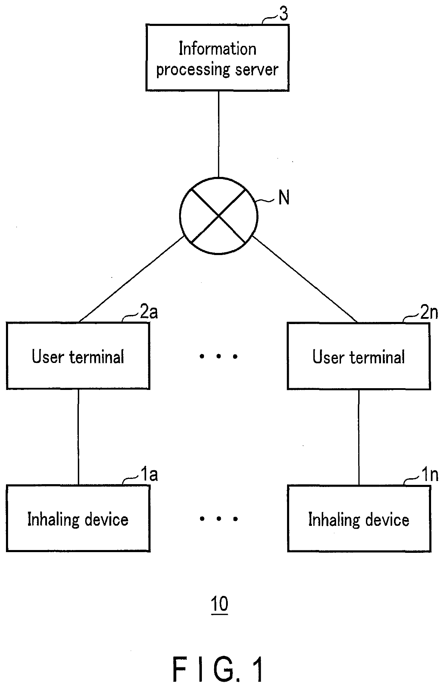

FIG. 1 is a schematic configuration diagram of an information distribution system according to an embodiment of the present invention.

As shown in FIG. 1, an information distribution system 10 includes, as an example, n inhaling devices 1a to In (where n is a given integral value equal to or greater than 1), n user terminals 2a to 2n respectively connected to the n inhaling devices 1a to In (where n is a given integral value equal to or greater than 1), and an information processing server 3 configured to enable communication with the user terminals 2a to 2n via a network N. In the description that follows, when the n inhaling devices are not distinguished from one another, each one will be simply referred to as an "inhaling device 1", with part of the reference symbol omitted. Similarly, when the n user terminals are not distinguished from one another, each one of them will be simply referred to as a "user terminal 2", with part of the reference symbol omitted. It is assumed that an inhaling device 1 and a user terminal 2 to which the same alphabetical symbol is appended at the end are possessed by an identical user. For example, an inhaling device 1a and a user terminal 2a are possessed by an identical user.

The information distribution system 10 is what is known as a "client server system". The information distribution system 10 is realized by mutual communications between the n user terminals 2, which are clients, and the information processing server 3 via the network N. The network N is realized by, for example, the Internet, a network such as a mobile telephone network, a local area network (LAN), or a network that is a combination thereof.

The inhaling device 1 is an electronic device that produces a substance to be inhaled by a user. The inhaling device 1 corresponds to a flavor inhaler. A configuration example of an inhaling device that may be the inhaling device 1 will be described later.

A user terminal 2 is a portable electronic device equipped with a communication function. For example, the user terminal 2 is a smartphone, a tablet terminal, or the like. A configuration example of the user terminal 2 will be discussed later.

The information processing server 3 is a computer equipped with an information processing function. The information processing server 3 is realized by, for example, one or more (at least one) server devices. A configuration example of the information processing server 3 will be described later.

The inhaling device 1 and the user terminal 2 are associated with each other, and mutual data transmission and reception are enabled by executing short-range wireless communications based on, for example, Bluetooth (registered trademark), Bluetooth Low Energy (BLE), etc. Data transmission and reception between the inhaling device 1 and the user terminal 2 may be executed by any communication technology such as Wi-Fi (registered trademark), a low-power wide-area network (LPWAN), a near-field communication (NFC), or the like, aside from BLE communication technology. Also, data transmission and reception between the inhaling device 1 and the user terminal 2 is not necessarily performed by wireless communications, and may be performed by wired communications using a Universal Serial Bus (USB), a Mini USB, a Micro USB, Lightning, or the like.

### <<2. Configuration Example of Inhaling Device>>

An inhaling device is a device that produces a substance to be inhaled by the user. In the description that follows, it is assumed that the substance produced by the inhaling device is an aerosol. In another case, the substance produced by the inhaling device may be a gas.

### (1) First Configuration Example

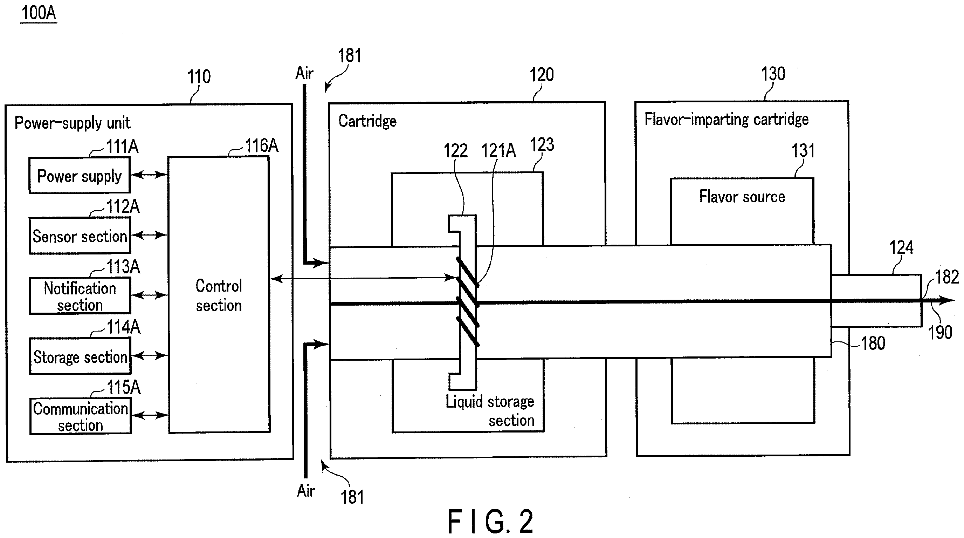

FIG. 2 is a schematic diagram schematically showing a first configuration example of the inhaling device. As shown in FIG. 2, an inhaling device 100A according to the present configuration example includes a power-supply unit 110, a cartridge 120, and a flavor-imparting cartridge 130. The power-supply unit 110 includes a power supply 111A, a sensor section 112A, a notification section 113A, a storage section 114A, a communication section 115A, and a control section 116A. The cartridge 120 includes a heating section 121A, a liquid guide section 122, and a liquid storage section 123. The flavor-imparting cartridge 130 includes a flavor source 131 and a mouthpiece 124. In the cartridge 120 and the flavor-imparting cartridge 130, an airflow path 180 is formed.

The power supply 111A accumulates electric power. Based on control by the control section 116A, the power supply 111A supplies power to each constituent element of the inhaling device 100A. The power supply 111A may be configured of, for example, a chargeable battery such as a lithium-ion secondary battery.

The sensor section 112A acquires various types of information relating to the inhaling device 100A. As an example, the sensor section 112A is configured of a pressure sensor such as a microphone capacitor, a flowrate sensor, a temperature sensor, etc., and acquires values involved with user inhalation. As another example, the sensor section 112A is configured of an input device which receives an information input from the user, such as a button, a switch, etc.

The notification section 113A notifies the user of the information. The notification section 113A is configured of, for example, a light-emitting device which emits light, a display device which displays an image, a sound output device which outputs sound, a vibration device which vibrates, etc.

The storage section 114A stores various types of information for operation of the inhaling device 100A. The storage section 114A is configured of, for example, a non-volatile storage medium such as a flash memory.

The communication section 115A is a communication interface that enables communications compatible with a given wired or wireless communication standard to be performed. As such a communication standard, Wi-Fi (registered trademark), Bluetooth (registered trademark), etc. may be adopted.

The control section 116A functions as an arithmetic processor and a controller, and controls the entire operation of the inhaling device 100A in accordance with various programs. The control section 116A is realized by, for example, electronic circuitry such as a central processing unit (CPU), or a microprocessor.

The liquid storage section 123 stores an aerosol source. By atomizing the aerosol source, aerosol is produced. The aerosol source is, for example, a polyhydric alcohol such as glycerin and propylene glycol, and a liquid such as water. The aerosol source may contain a tobacco-derived or non-tobacco-derived flavor component. When the inhaling device 100A is a medical aspirator such as a nebulizer, the aerosol source may contain a drug.

The liquid guide section 122 guides the aerosol source which is a liquid stored in the liquid storage section 123 from the liquid storage section 123, and holds the aerosol source. The liquid guide section 122 is, for example, a wick formed by twisting a fiber material such as glass fiber or a porous material such as a porous ceramic. In this case, the aerosol source stored in the liquid storage section 123 is guided by the capillary effect of the wick.

The heating section 121A heats the aerosol source, atomizes the aerosol source and produce aerosol. In the example shown in FIG. 2, the heating section 121A is configured as a coil, and is wound around the liquid guide section 122. When the heating section 121A generates heat, the aerosol source held in the liquid guide section 122 is heated and atomized, thus producing aerosol. The heating section 121A generates heat when fed from the power supply 111A. As an example, feeding may be performed when the sensor section 112A has detected the commencement of inhaling by the user and/or the input of predetermined information. Feeding may be stopped when the sensor section 112A has detected the termination of inhaling by the user and/or the input of predetermined information.

The flavor source 131 is a constituent element for imparting a flavor component to aerosol. The flavor source 131 may contain a tobacco-derived or non-tobacco-derived flavor component.

The airflow path 180 is a path of air inhaled by the user. The airflow path 180 has a tubular structure including, at one of both ends, an air inflow hole 181, which is an inlet of air flowing to the airflow path 180, or an air outflow hole 182, which is an outlet of air flowing from the airflow path 180. In the middle of the airflow path 180, the liquid guide section 122 is arranged on an upstream side (the side closer to the air inflow hole 181), and a flavor source 131 is arranged on a downstream side (the side closer to the air outflow hole 182). The air flowing in from the air inflow hole 181 in accordance with user inhalation is mixed with the aerosol produced by the heating section 121A, and, as shown by an arrow 190, passes through the flavor source 131 and is transported to the air outflow hole 182. When a mixed fluid of the aerosol and air passes through the flavor source 131, a flavor component included in the flavor source 131 is imparted to the aerosol.

The mouthpiece 124 is a member which comes in contact with the user's mouth during inhaling. In the mouthpiece 124, the air outflow hole 182 is arranged. The user can introduce a mixed fluid of the aerosol and air into the oral cavity through inhalation via the mouthpiece 124.

A configuration example of the inhaling device 100A has been described above. As a matter of course, the configuration of the inhaling device 100A is not limited to the above, and various configurations that will be described below as examples may be adopted.

As an example, the inhaling device 100A may not include a flavor-imparting cartridge 130. In this case, a mouthpiece 124 is provided in the cartridge 120.

As another example, the inhaling device 100A may include a plurality of types of aerosol sources. Still other types of aerosol may be produced by a chemical reaction caused by a plurality of types of aerosol produced by a plurality of types of aerosol sources being mixed in the airflow path 180.

Moreover, the means for atomizing the aerosol source are not limited to heating by the heating section 121A. For example, the aerosol source may be atomized by means such as vibration atomizing or induction heating.

### (2) Second Configuration Example

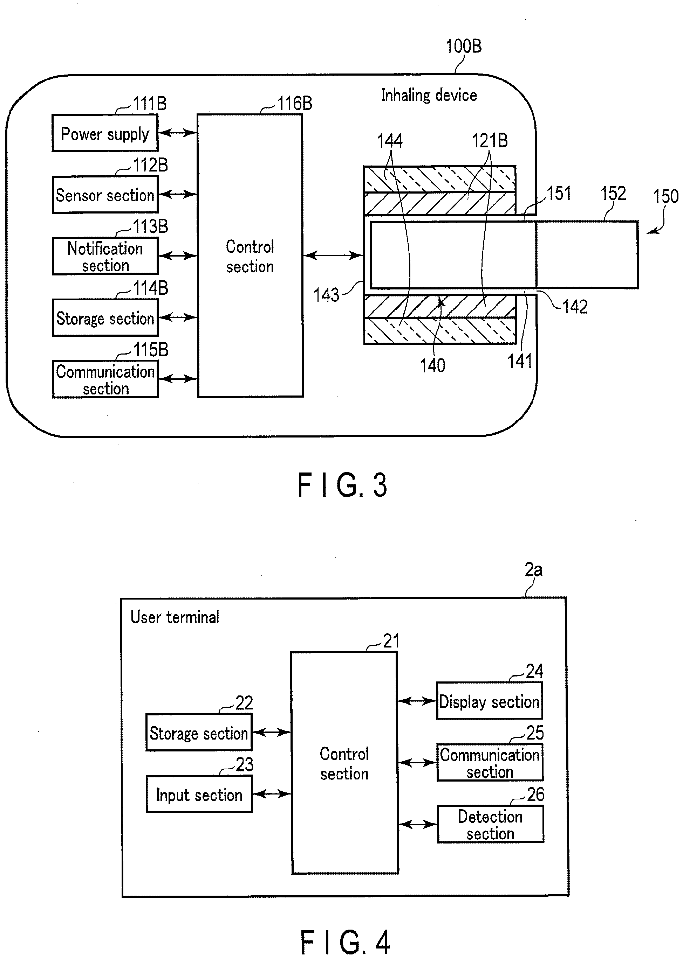

FIG. 3 is a schematic diagram schematically showing a second configuration example of the inhaling device. As shown in FIG. 3, an inhaling device 100B according to the present configuration example includes a power supply 111B, a sensor section 112B, a notification section 113B, a storage section 114B, a communication section 115B, a control section 116B, a heating section 121B, a holding part 140, and a heat-insulating part 144.

The power supply 111B, the sensor section 112B, the notification section 113B, the storage section 114B, the communication section 115B, and the control section 116B are substantially identical to the corresponding constituent elements included in the inhaling device 100A according to the first configuration example.

The holding part 140 includes an internal space 141, and holds a stick-shaped base material 150 with part of the stick-shaped base material 150 housed in the internal space 141. The holding part 140 includes an opening 142 which allows the internal space 141 to be communicated to the outside, and holds the stick-shaped base material 150 inserted into the internal space 141 from the opening 142. The holding part 140 is, for example, a tubular body including the opening 142 and a bottom portion 143 as bottom surfaces, and defines a columnar internal space 141. The holding part 140 is also equipped with a function of defining a path of air that is supplied to the stick-shaped base material 150. An air inflow hole which is an inlet of air to such a path is arranged in, for example, the bottom portion 143. On the other hand, an air outflow hole which is an outlet of air from such a path is the opening 142.

The stick-shaped base material 150 includes a base material portion 151 and a suction portion 152. The base material portion 151 includes an aerosol source. In the present configuration example, the aerosol source is not limited to a liquid, and may be a solid. With the stick-shaped base material 150 held in the holding part 140, at least part of the base material portion 151 is housed in the internal space 141, and at least part of the suction portion 152 projects from the opening 142. Through user inhalation via the suction portion 152 projecting from the opening 142 which comes into contact with the user's mouth, air flows in from an air inflow hole (not illustrated) to the internal space 141, and reaches the user's oral cavity together with the aerosol produced from the base material portion 151.

The heating section 121B has a configuration similar to that of the heating section 121A according to the first configuration example. However, in the example shown in FIG. 3, the heating section 121B is configured in a film shape, and is arranged so as to cover the outer periphery of the holding part 140. When the heating section 121B generates heat, the base material portion 151 of the stick-shaped base material 150 is heated from the outer periphery, and thereby aerosol is produced.

The heat-insulating part 144 prevents heat transfer from the heating section 121B to another constituent element. For example, the heat-insulating part 144 is configured from a vacuum-insulating material, an aerogel-insulating material, etc.

A configuration example of the inhaling device 100B has been described above. As a matter of course, the configuration of the inhaling device 100B is not limited to the above, and various configurations described below as examples may be adopted.

As an example, the heating section 121B may be configured in a blade shape and arranged so as to project from the bottom portion 143 of the holding part 140 into the internal space 141. In this case, the blade-shaped heating section 121B is inserted into the base material portion 151 of the stick-shaped base material 150, and the base material portion 151 of the stick-shaped base material 150 is heated from the inside. As another example, the heating section 121B may be arranged so as to cover the bottom portion 143 of the holding part 140. Also, the heating section 121B may be configured as a combination of two or more of a first heating section that covers an outer periphery of the holding part 140, a blade-shaped second heating section, and a third heating section that covers a bottom portion 143 of the holding part 140.

As another example, the holding part 140 may include an open/close mechanism such as a hinge, which opens and closes part of an outer shell that forms the internal space 141. By opening and closing the outer shell, the holding part 140 may hold the stick-shaped base material 150 inserted into the internal space 141. In this case, the heating section 121B may be provided in the place of the holding part 140 which holds the stick-shaped base material 150, and may heat the stick-shaped base material 150 while pressing it.

Moreover, the means for atomizing the aerosol source are not limited to heating by the heating section 121B. For example, the means for atomizing the aerosol source may be based on induction heating.

Also, the inhaling device 100B may further include the heating section 121A, the liquid guide section 122, the liquid storage section 123, and the airflow path 180 according to the first configuration example, and the air outflow hole 182 of the airflow path 180 may also function as an air inflow hole to the internal space 141. In this case, a mixed fluid of the aerosol and air produced by the heating section 121A flows into the internal space 141, is further mixed with the aerosol produced by the heating section 121B, and reaches the oral cavity of the user.

### <<3. Configuration Example of User Terminal>>

FIG. 4 is a block diagram schematically showing a configuration example of a user terminal according to an embodiment of the present invention.

The user terminal 2a includes a control section 21, a storage section 22, an input section 23, a display section 24, a communication section 25, and a detection section 26. These sections are mutually connected via a bus line.

The control section 21 controls the entire operation of the user terminal 2a in accordance with a program stored in the storage section 22. The control section 21 is configured of, for example, electronic circuitry such as a processor. The processor is, for example, a CPU or the like.

The storage section 22 is configured of a main storage and an auxiliary storage. The main storage is configured of, for example, a volatile memory that provides a work area for the processor. The main storage is configured of, for example, a random access memory (RAM) or the like. The auxiliary storage is configured of, for example, a non-volatile memory that stores various types of information and programs for operation of the user terminal 2a. The auxiliary storage is configured of, for example, a hard disk drive (HDD), a solid-state drive (SSD), or the like.

Based on the user's operation, the input section 23 receives an instruction. The input section 23 is configured of, for example, a keyboard, a touchpad, or the like.

The display section 24 displays a variety of screens. The display section 24 is configured of, for example, a liquid crystal display.

The communication section 25 is configured of one or more communication interfaces that enable communications compatible with a given wired or wireless communication standard to be performed. The communication section 25 includes one or more communication interfaces that enable communications to be performed between the user terminal 2a and the inhaling device 1a, as described above. The communication section 25 includes one or more communication interfaces that enable communications to be performed between the user terminal 2a and the information processing server 3 via the network N.

The detection section 26 is configured of a sensor that detects various types of information. The detection section 26 includes a sensor that detects position information on the user terminal 2a. For example, the position information is information indicating latitude and longitude. The sensor that detects position information is, for example, a GPS sensor.

Based on an activation of the inhaling device 1a, the above-described user terminal 2a transmits, to the information processing server 3, log information including position information on the user terminal 2a connected to the inhaling device 1a, to be described below as an example. Based on the activation of the inhaling device 1a, the user terminal 2a receives, in real time via the communication section 25, information indicating the activation of the inhaling device 1a from the inhaling device 1a. In an example, the inhaling device 1a transmits information indicating an activation of the inhaling device 1a to the user terminal 2a, based on having detected an activation of the inhaling device 1a in response to inhalation by the user with the inhaling device 1a. In another example, the inhaling device 1a transmits information indicating an activation of the inhaling device 1a to the user terminal 2a, based on having detected an input for activating the inhaling device 1a by the user through the use of a button, a switch, etc. The information indicating an activation of the inhaling device 1a may be, for example, any information that can indicate activation of the inhaling device 1a, such as information indicating inhalation by the user with the inhaling device 1a and information indicating a heater state of the inhaling device 1a. The connection for communications between the user terminal 2a and the inhaling device 1a may be either constantly, or intermittently enabled based on the activation of the inhaling device 1a.

Subsequently, based on receiving information indicating an activation of the inhaling device 1a, the user terminal 2a acquires position information on the user terminal 2a. The user terminal 2a acquires position information on the user terminal 2a detected by the detection section 26. The position information on the user terminal 2a corresponds to position information on the user who possesses the user terminal 2a and position information on the inhaling device 1a owned by the user.

Subsequently, based on the inhaling device 1a being activated, the user terminal 2a transmits log information in real time to the information processing server 3 via the communication section 25. The log information is information relating to recording of an activation of the inhaling device 1a. The log information includes position information on the user terminal 2a. The log information may include time information indicating an activation time of the inhaling device 1a. The user terminal 2a may acquire time information when information indicating an activation of the inhaling device 1a has been received from the inhaling device 1a as an activation time of the inhaling device 1a. The log information may include user information that specifies a user who possesses the inhaling device 1a. The user information may be stored in the user terminal 2a. The log information may include type information indicating the type of inhaling device 1a. The type information may be stored in the user terminal 2a, or transmitted from the inhaling device 1a to the user terminal 2a along with information indicating an activation of the inhaling device 1a. The type information is, for example, information such as the model number of the inhaling device which indicates the difference in heating temperature. The log information may include information other than the time information, the user information, and the type information. The timing at which the user terminal 2a transmits the log information to the information processing server 3 need not necessarily be in real time, and may be every predetermined period (e.g., every single minute).

A hardware configuration of the user terminal 2a is not limited to the above-described configuration. The above-described constituent elements of the user terminal 2a may be suitably omitted or changed, and a new constituent element may be added to the user terminal 2a. Herein, a configuration example of the user terminal 2a has been described; however, the configuration of the user terminal 2 other than the user terminal 2a is similar to that of the user terminal 2a, and the description thereof will be omitted. Similarly to the user terminal 2a, the user terminal 2 other than the user terminal 2a may transmit log information including position information on the user terminal 2 to the information processing server 3.

### << 4. Configuration Example of Information Processing Server >>

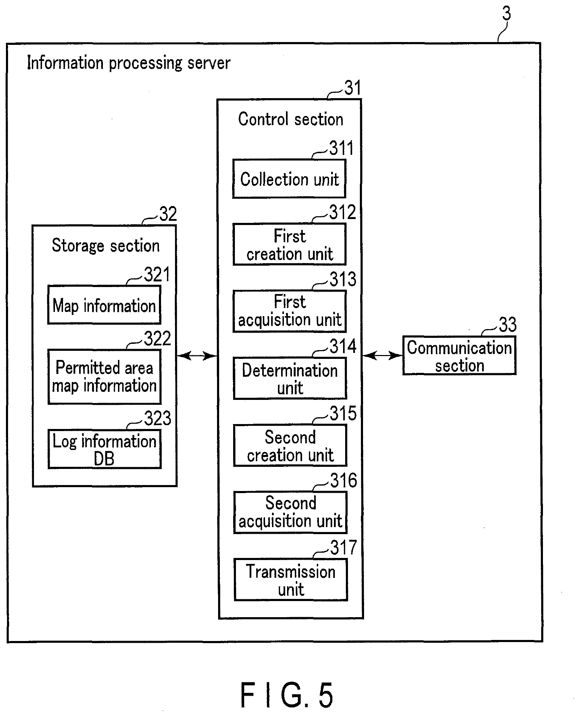

FIG. 5 is a block diagram schematically showing a configuration example of an information processing server according to an embodiment of the present invention.

The information processing server 3 includes a control section 31, a storage section 32, and a communication section 33. These sections are mutually connected via a bus line.

The control section 31 controls the entire operation of the information processing server 3 in accordance with programs stored in the storage section 32. The control section 31 is configured of, for example, electronic circuitry such as a processor. The processor is, for example, a CPU or the like. By executing the programs stored in the storage section 32, the control section 31 realizes the respective units that will be discussed later, and executes a variety of operations.

The storage section 32 is configured of a main storage and an auxiliary storage, similarly to the above-described storage section 22. The storage section 32 stores, in the control section 31, programs for realizing the respective units that will be discussed later. The storage section 32 stores map information 321, permitted area map information 322, and a log information DB 323.

The map information 321 is information relating to an existing general map indicating states of things that are distributed on the surface of the ground. The map information 321 may be stored in advance in the storage section 32, or downloaded from a server (not illustrated) to the information processing server 3 via the network N. The map information 321 may be suitably updated.

The permitted area map information 322 is information relating to a permitted area map. The permitted area map is a map indicating a plurality of permitted areas. The "permitted area" refers to an area in which the use of the inhaling device 1 is permitted. The permitted area may be an area in which given users are permitted to use the inhaling device 1. The permitted area may be an area among the areas in which the use of the inhaling device 1 is permitted other than the area where only specific users are permitted to use the inhaling device 1. Also, the permitted area may include an area in which the smoking of a cigarette is permitted, in addition to the use of the inhaling device 1. The permission means authorization by an administrator of an area or the public administration. The "area" refers to a unit of location such as a facility or a site. The permitted area map indicates a plurality of permitted areas by means of text information indicating names of the respective permitted areas with characters, marks, or the like. The permitted area map is configured in such a manner that text information relating to each of the permitted areas is superimposed on a map similar to one that is based on the map information 321. The text information relating to each of the permitted areas is linked with a position of each of the permitted areas on the permitted area map. A configuration example of the permitted area map will be discussed later.

A permitted area map is created as will be described below as an example. Permitted areas are individually registered, for example, in a permitted area map through an input of position information (latitude and longitude) and text information that specifies the permitted areas via a terminal (not illustrated). Permitted areas are collectively registered, for example, in the permitted area map through an input of concrete facility names of the permitted areas via a terminal (not illustrated). The concrete facility names include names of coffee shops, pubs, malls, or the like. Permitted areas are collectively registered, for example, in the permitted area map through an input of abstract facility names of the permitted areas via a terminal (not illustrated). The abstract facility names include service areas (SAs), parks, stadiums, stations, airports, or the like. The permitted area map information 322 may be stored in advance in the storage section 32, or downloaded from a server (not illustrated) to the information processing server 3 via the network N.

The permitted area map information 322 may be suitably updated, as will be described below as an example. A permitted area is additionally registered, for example, in the permitted area map through an additional input of the permitted area via a terminal (not illustrated). A permitted area is deleted, for example, from the permitted area map through an input of a deletion of the permitted area via a terminal (not illustrated). A permitted area is additionally registered, for example, in the permitted area map by the control section 31 through acquiring a certain number of posts from users indicating presence of the permitted area for the inhaling device 1. For example, a permitted area is deleted from the permitted area map by the control section 31 through acquiring a certain number of posts from users indicating absence of the permitted area for the inhaling device 1.

The log information DB 323 is a database that records data based on log information transmitted from the user terminal 2 to the information processing server 3. The log information DB 323 is updated every time the information processing server 3 receives log information from the user terminal 2. A configuration example of the log information DB 323 will be discussed later.

The communication section 33 is configured of one or more communication interfaces that enable communications compatible with a given wireless communication standard to be performed. The communication section 33 includes one or more communication interfaces that enable communications to be performed between the information processing server 3 and the user terminal 2 via the network N.

A hardware configuration of the information processing server 3 is not limited to the above-described configuration. The above-described constituent elements of the information processing server 3 may be suitably omitted or changed, and a new constituent element may be added to the information processing server 3.

Each of the units realized by the above-described control section 31 will be described.

The control section 31 realizes a collection unit 311, a first creation unit 312, a first acquisition unit 313, a determination unit 314, a second creation unit 315, a second acquisition unit 316, and a transmission unit 317.

The collection unit 311 collects, via the communication section 33, position information on a plurality of user terminals 2 respectively connected to a plurality of inhaling devices 1, based on the respective inhaling devices 1 being activated.

Based on the position information collected by the collection unit 311, the first creation unit 312 creates a user position map. The user position map is a map indicating, in an identifiable manner, positions of some or all of the user terminals 2 corresponding to the position information collected by the collection unit 311. The user position map is a map indicating, in an identifiable manner, positions of the user terminals 2 which are superimposed on a map that is based on the map information 321. The positions of the user terminals 2 indicated on the user position map correspond to positions of users who use the inhaling device 1. A configuration example of the user position map will be discussed later.

The first acquisition unit 313 acquires permitted area map information 322 from the storage section 32.

The determination unit 314 determines whether or not it is appropriate to present, as an available area for the inhaling device 1, each of one or more areas in which user terminals 2 are positioned on the user position map. The available area is, for example, an area in which given users are permitted to use the inhaling device 1. The available area may be an area among the areas where the use of the inhaling device 1 is permitted other than the area in which only specific users are permitted to use the inhaling device 1. Also, the available area may be an area other than the area in which the use of the inhaling device 1 is not permitted. For example, the determination unit 314 determines, based on the user position map and the permitted area map, whether or not it is appropriate to present, as an available area for the inhaling device 1, each of one or more areas in which user terminals 2 are positioned on the user position map.

The second creation unit 315 creates a determination result map. The determination result map is a map indicating, in an identifiable manner on a map that is based on the map information 321, areas determined as appropriate for presentation as available areas for the inhaling device 1. A configuration example of the determination result map will be discussed later.

The second acquisition unit 316 acquires a request for the determination result map from the user terminal 2 via the communication section 33.

Based on the request acquired by the second acquisition unit 316, the transmission unit 317 transmits, via the communication section 33, information relating to the determination result map to the user terminal 2. Hereinafter, the information relating to the determination result map is also referred to as "determination result map information". The determination result map information is information that enables the user terminal 2 to display the determination result map. The determination result map information includes a determination result map.

### << 5. Configuration Example of Log Information DB >>

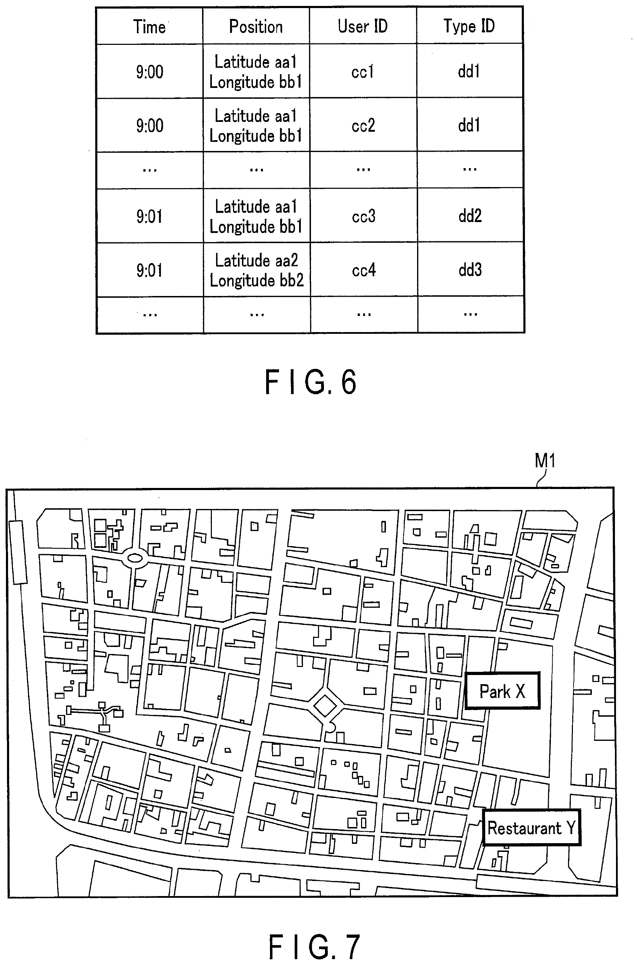

FIG. 6 is a diagram schematically showing a configuration example of a log information DB according to the embodiment of the present invention.

The log information DB 323 includes a record configured by data in which "time", "position", "user ID", and "type ID" are associated with one another. The data that configures the record is configured based on log information. The "time" corresponds to time information included in the log information. The "position" corresponds to position information included in the log information. The "user ID" corresponds to user information included in the log information. The "type ID" corresponds to type information included in the log information.

### « 6. Configuration Example of Permitted Area Map »

FIG. 7 is a diagram schematically showing a configuration example of a permission area map according to the embodiment of the present invention.

A permitted area map M1 indicates Park X and Restaurant Y as permitted areas. The permitted area map is configured in such a manner that text information indicating Park X and text information indicating Restaurant Y are superimposed on a map. The text information indicating Park X is linked with a position of Park X on the permitted area map. The text information indicating Restaurant Y is linked with a position of Restaurant Y on the permitted area map.

### « 7. Configuration Example of User Position Map »

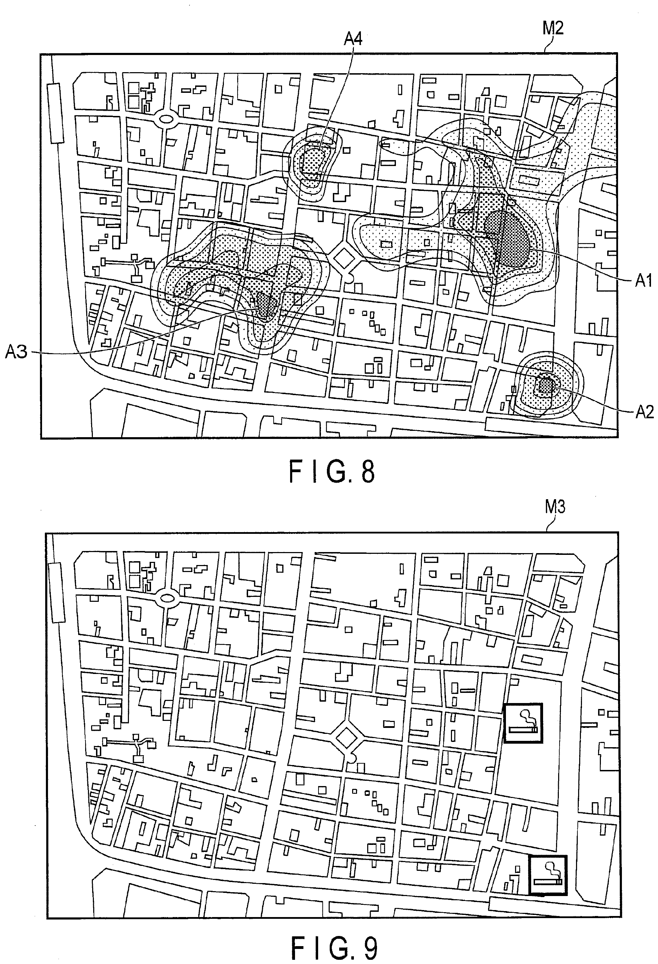

FIG. 8 is a diagram schematically showing a configuration example of a user position map according to the embodiment of the present invention.

A user position map M2 is a heat map indicating, in an identifiable manner, positions of all the user terminals 2, based on position information on the user terminals 2 collected in real time at a certain point in time by the collection unit 311. The user position map M2 indicates, in addition to positions of the user terminals 2, a relative number of user terminals 2 at each position in an identifiable manner. For example, a first area A1, a second area A2, and a third area A3 are areas with a relatively large number of user terminals 2. It is assumed that the first area A1 is an area corresponding to Park X, which is a permitted area. It is assumed that the second area A2 is an area corresponding to Restaurant Y, which is a permitted area. It is assumed that the third area A3 is an area not registered as a permitted area in the permitted area map. The fourth area A4 is an area with a relatively small number of user terminals 2. It is assumed that the fourth area A4 is an area not registered as a permitted area in the permitted area map. One or more areas other than the first area A1, the second area A2, the third area A3, and the fourth area A4 where user terminals 2 are positioned are areas with a relatively small number of user terminals 2.

The user position map may be configured of a variety of maps other than a heat map. The user position map may be a map indicating, in an identifiable manner, an absolute number of user terminals 2 at each position in addition to positions of the user terminals 2. The user position map may have any configuration that indicates positions of user terminals 2 in an identifiable manner, and the number of user terminals 2 at each position is not necessarily indicated in an identifiable manner.

### << 8. Configuration Example of Determination Result Map >>

FIG. 9 is a diagram schematically showing a configuration example of a determination result map according to the embodiment of the present invention.

A determination result map M3 is a map in which a first icon indicating that the inhaling device 1 can be used is superimposed on the first area A1 determined as appropriate for presentation as an available area for the inhaling device 1. The determination result map M3 is a map in which the first icon is superimposed on the second area A2 determined as appropriate for presentation as an available area for the inhaling device 1. In the determination result map M3, the first icon is not superimposed on an area determined as inappropriate for presentation as an available area for the inhaling device 1.

The determination result map may indicate positions of user terminals 2 together with the first icon, similarly to the user position map. In this example, the determination result map may indicate positions of user terminals 2 in an area determined as appropriate for presentation as an available area for the inhaling device 1, similarly to the user position map. Instead of or in addition to the above, the determination result map may indicate positions of user terminals 2 in an area determined as inappropriate for presentation as an available area for the inhaling device 1, similarly to the user position map. The determination result map may have any configuration that indicates, in an identifiable manner, an area determined as appropriate for presentation as an available area for the inhaling device 1, and the indication may be performed with, for example, characters, aside from the first icon.

### << 9. Example of Processing by Information Processing Server >>

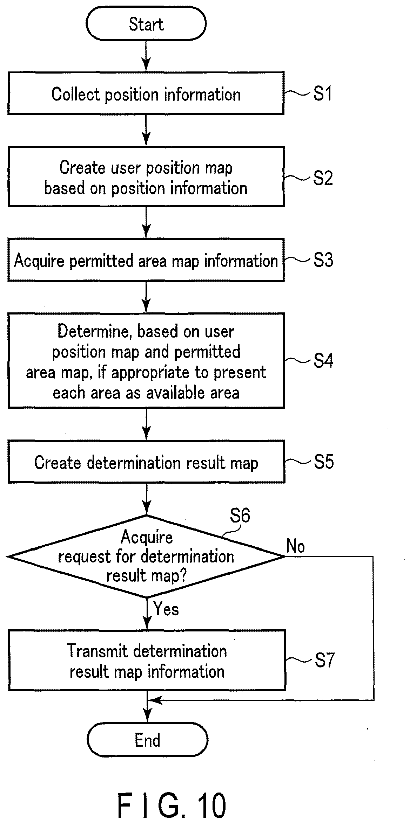

FIG. 10 is a flowchart showing an example of processing by the information processing server according to the embodiment of the present invention.

The collection unit 311 collects position information on a plurality of user terminals 2 respectively connected to a plurality of inhaling devices 1, based on each of the inhaling devices 1 being activated (step S1). At step S1, the collection unit 311 receives, in real time, for example, log information transmitted from each of the user terminals 2 via the communication section 33. Based on the received log information, the collection unit 311 collects, in real time, for example, position information on the user terminals 2. The collection unit 311 adds a plurality of items of data based on the received log information to the log information DB 323 one by one.

The first creation unit 312 creates a user position map based on the position information collected by the collection unit 311 (step S2). At step S2, the first creation unit 312 acquires the position information collected in real time, for example, at a certain point in time by the collection unit 311 from the log information DB 323. The first creation unit 312 creates a user position map based on the position information collected in real time, for example, at a certain point in time by the collection unit 311. The first creation unit 312 may update the position information acquired from the log information DB 323 in accordance with passage of time. The first creation unit 312 is capable of updating, in real time, for example, a user position map based on the updated position information. The updating of the user position map need not necessarily be performed in real time, and may be performed every predetermined period (e.g., every single minute).

The first acquisition unit 313 acquires permitted area map information 322 (step S3). At step S3, the first acquisition unit 313 acquires, for example, the permitted area map information 322 from the storage section 32 based on the user position map being created by the first creation unit 312.

The determination unit 314 determines, based on the user position map and the permitted area map, whether or not it is appropriate to present, as an available area for the inhaling device 1, each of one or more areas in which user terminals 2 are positioned on the user position map (step S4). At step S4, the determination unit 314 superimposes, for example, the user position map and the permitted area map. The determination unit 314 determines whether or not each of all the areas in which user terminals 2 are positioned on the user position map corresponds to any one of the permitted areas indicated on the permitted area map. Based on the determination, the determination unit 314 determines whether or not it is appropriate to present, as an available area for the inhaling device 1, each of all the areas in which user terminals 2 are positioned on the user position map. By using the permitted area map, it is possible to ensure the precision in determining, by the determination unit 314, appropriateness of presentation of each of the areas relating to reliability of the determination result map as an available area for the inhaling device 1.

In the example of the permitted area map M1 shown in FIG. 7 and the user position map M2 shown in FIG. 8, the determination unit 314 superimposes the user position map M2 and the permitted area map M1. The determination unit 314 determines whether or not each of one or more areas in which user terminals 2 are positioned on the user position map M2 corresponds to either Park X or Restaurant Y, which are permitted areas indicated on the permitted area map M1. The determination unit 314 determines that the first area A1 where user terminals 2 are positioned on the user position map M2 corresponds to the area of Park X, which is a permitted area indicated on the permitted area map A1. The determination unit 314 determines that the second area A2 where user terminals 2 are positioned on the user position map M2 corresponds to the area of Restaurant Y, which is a permitted area indicated on the permitted area map A1. The determination unit 314 determines that the third area A3 where user terminals 2 are positioned on the user position map M2 does not correspond to any of the permitted areas indicated on the permitted area map A1. The determination unit 314 determines that the fourth area A4 where user terminals 2 are positioned on the user position map M2 does not correspond to any of the permitted areas indicated on the permitted area map A1. The determination unit 314 determines that one or more areas in which user terminals 2 are positioned on the user position map M2 other than the first area A1, the second area A2, the third area A3, and the fourth area A4 do not correspond to any of the permitted areas indicated on the permitted area map A1. The determination unit 314 determines that it is appropriate to present, as an available area for the inhaling device 1, the first area A1 and the second area A2 where user terminals 2 are positioned on the user position map M2. The determination unit 314 determines that it is inappropriate to present, as an available area for the inhaling device 1, the third area A3 and the fourth area A4 where user terminals 2 are positioned on the user position map M2. The determination unit 314 determines that it is inappropriate to present, as available areas for the inhaling device 1, one or more areas in which user terminals 2 are positioned on the user position map M2 other than the first area A1, the first area A2, the third area A3, and the fourth area A4.

The second creation unit 315 creates a determination result map (step S5). At step S5, the second creation unit 315 creates, for example, a determination result map based on a result of determination by the determination unit 314. Comparison of a plurality of maps and creation of a new map based on the superimposing may be performed by a variety of publicly known techniques.

In the example of the determination result map M3 shown in FIG. 9, the second creation unit 315 superimposes a first icon on the first area A1 determined as appropriate for presentation as an available area for the inhaling device 1. The second creation unit 315 superimposes a first icon on the second area A2 determined as appropriate for presentation as an available area for the inhaling device 1. The second creation unit 315 does not superimpose the first icon on the third area A3 and the fourth area A4 determined as inappropriate for presentation as available areas for the inhaling device 1. The second creation unit 315 does not superimpose the first icon on any of one or more areas determined as inappropriate for presentation as available areas for the inhaling device 1 other than the third area A3 and the fourth area A4. The second creation unit 315 does not superimpose the first icon on an area whose appropriateness for presentation as an available area for the inhaling device 1 has not been determined, even if such an area corresponds to a permitted area indicated on the permitted area map.

The second acquisition unit 316 acquires a request for the determination result map from the user terminal 2 (step S6). At step S6, the second acquisition unit 316 acquires, for example, a request for the determination result map to be transmitted from the user terminal 2 to the information processing server 3 via the communication section 33. The request for the determination result map may include position information on the user terminal 2 which transmits the request.

When the second acquisition unit 316 does not acquire a request for the determination result map from the user terminal 2 (step S6; NO), the processing ends. When the second acquisition unit 316 acquires a request for the determination result map from the user terminal 2 (step S6; YES), the processing shifts from step S6 to step S7.

Based on the request acquired by the second acquisition unit 316, the transmission unit 317 transmits determination result map information to the user terminal 2 (step S7). At step S7, based on the position information on the user terminal 2 included in the request for the information determination result map, the transmission unit 317 specifies, for example, a range of the determination result map to be covered by the determination result map. The range of the determination result map is a range including positions based on the position information on the user terminal 2. The size of the range of the determination result map can be suitably varied. The transmission unit 317 transmits, via the communication section 33, determination result map information including the specified range of the determination result map to the user terminal 2 which has transmitted a request to the information processing server 3.

At step S4, the targets to be determined by the determination unit 314 are all the areas in which user terminals 2 are positioned on the user position map; however, the configuration is not limited thereto. The determination unit 314 may determine whether or not it is appropriate to present, as an available area for the inhaling device 1, each of one or more areas in which user terminals 2 of a number equal to or greater than the first threshold value are positioned on the user position map. The first threshold value is a threshold value for extracting, from all the areas in which user terminals 2 are positioned on the user position map, an area with a relatively large number of user terminals 2. The first threshold value may be either fixed or varied according to the number of user terminals 2 corresponding to the position information used to create the user position map.

In this example, the determination unit 314 counts the number of user terminals 2 in each of all the areas in which user terminals 2 are positioned on the user position map. The determination unit 314 compares the number of user terminals 2 in each of all the areas in which user terminals 2 are positioned on the user position map with the first threshold value. The determination unit 314 determines whether or not it is appropriate to present, as an available area for the inhaling device 1, each of all the areas in which user terminals 2 of a number equal to or greater than the first threshold value are positioned on the user position map. On the other hand, the determination unit 314 does not determine appropriateness of presentation of each of all the areas in which user terminals 2 of a number less than the first threshold value are positioned on the user position map as an available area for the inhaling device 1.

The determination unit 314 uses the first threshold value for the purpose of ensuring precision in determining appropriateness of presentation of each of the areas relating to reliability of the determination result map as an available area for the inhaling device 1. Due to, for example, a delay in updating the permitted area map, there may be a case where an area registered as a permitted area on the permitted area map is actually no longer a permitted area. Also, there is a high possibility that an area with a relatively large number of user terminals 2 on the user position map is actually a permitted area. On the other hand, there is a possibility that an area with a relatively small number of user terminals 2 on the user position map is actually not a permitted area but a prohibited area. The "prohibited area" refers to an area in which all the users are prohibited to use the inhaling device 1. The prohibited area may include an area in which the smoking of a cigarette is prohibited, in addition to the use of the inhaling device 1. By narrowing the targets to be determined by the determination unit 314 to areas in which user terminals 2 of a number equal to or greater than the first threshold value are positioned, it is possible to reduce the possibility of determining that it is appropriate to present an area that is no longer a permitted area as an available area for the inhaling device 1. Thereby, it is possible to ensure precision in the determining, by the determination unit 314, of the appropriateness of presentation of each of the areas as an available area for the inhaling device 1.

The determination unit 314 determines, at step S4, whether or not it is appropriate to present, as an available area for the inhaling device 1, each of one or more areas in which user terminals 2 are positioned on the user position map 1, based on the user position map and the permitted area map; however, the configuration is not limited thereto. The determination unit 314 may determine whether or not it is appropriate to present, as an available area for the inhaling device 1, each of one or more areas in which user terminals 2 are positioned on the user position map, without using the permission area map.

For example, the determination unit 314 can determine, based on a shift of position distributions of user terminals 2 indicated on the user position map, whether or not it is appropriate to present, as an available area for the inhaling device 1, each of one or more areas in which user terminals 2 are positioned on the user position map. In this example, the determination unit 314 may determine that it is appropriate to present, as an available area for the inhaling device 1, an area in which at least one or more user terminals 2 are positioned continuously for a certain period of time on the user position map. This is because, in an area appropriate for presentation as an available area for the inhaling device 1, a large number of users tend to use the inhaling device 1 by turns. The period of time can be suitably varied. On the other hand, the determination unit 314 may determine that it is inappropriate to present an area in which at least one or more user terminals 2 are not positioned on the user position map continuously for a certain period of time as an available area for the inhaling device 1. This is because, in an area that is inappropriate for presentation as an available area for the inhaling device 1, a small number of users tend to use the inhaling device 1 momentarily.

Instead of the above, the determination unit 314 may determine that it is appropriate to present, as an available area for the inhaling device 1, an area in which user terminals 2 of a number equal to or greater than the second threshold value are positioned continuously for a certain period of time on the user position map. The second threshold value is a threshold value for extracting, from all the areas in which user terminals 2 are positioned on the user position map, an area with a relatively large number of user terminals 2 continuously for a certain period of time. The second threshold value can be suitably varied. On the other hand, the determination unit 314 may determine that it is inappropriate to present an area in which user terminals 2 of a number equal to or greater than the second threshold value are not positioned continuously for a certain period of time on the user position map as an available area for the inhaling device 1.

In this example, the determination unit 314 can determine whether or not it is appropriate to present, as an available area for the inhaling device 1, each of the areas in which user terminals 2 are positioned on the user position map, without using the permission area map.

According to the present embodiment, the information processing server 3 can create a determination result map through determination processing relating to appropriateness of presentation of areas as available areas. It is possible to reduce the possibility that the information processing server 3 presents, as an area in which the inhaling device 1 can be used, an area in which the user terminal 2 is positioned but only limited people are allowed to enter and exist, such as the premises of a company. It is thereby possible for the information processing server 3 to appropriately present, to the user, an area in which the inhaling device 1 can be used, while suppressing an increase in cost. By checking the determination result map, the user is capable of easily grasping, in real time, an area in which the inhaling device 1 can be used.

### << 10. Modifications>>

In the above-described embodiment, an example has been described in which the first creation unit 312 creates a user position map based on position information collected in real time at a certain point in time by the collection unit 311; however, the configuration is not limited thereto. The first creation unit 312 may create a user position map based on position information collected during a certain period of time by the collection unit 311. In an example, the period of time is a period with a length that is set differently according to the time zone. In this example, the period of time may be set in such a manner that the length is shorter in the daytime and the length is longer in the nighttime, or vice versa (the length is longer in the daytime and shorter in the nighttime). This is because the number of users who use the inhaling device 1 may be greater in the daytime (nighttime) and smaller in the nighttime (daytime). In another example, the period of time is a period with a length that is set differently according to the number of days that have passed from the start of a determination result map creation service. In this example, the period of time may be set so as to be longer at the start time of the creation service, and shorter according to the number of days that have passed from the start of the creation service. This is because the number of users who participate in the creation service is smaller at the start time of the creation service, and becomes greater in accordance with the number of days that have passed from the start of the creation service.

According to this example, since the information processing server 3 uses the position information on a certain number of user terminals 2, it is possible to ensure the precision of the user position map relating to the reliability of the determination result map.

According to the above-described embodiment, the number of user terminals 2 corresponding to the position information used by the first creation unit 312 for creating the user position map is unspecified; however, the configuration is not limited thereto. The first creation unit 312 may create a user position map based on the position information on user terminals 2 of a number equal to or greater than the third threshold value collected by the collection unit 311. The third threshold value is a threshold value relating to the number of user terminals 2 for ensuring the precision of the user position map relating to the reliability of the determination result map. The third threshold value can be suitably varied.

If the collection unit 311 collects, in real time, position information on user terminals 2 of a number equal to or greater than the third threshold value at a certain point in time, the first creation unit 312 creates a user position map based on the position information collected at that certain point in time. If the collection unit 311 cannot collect, in real time, position information on user terminals 2 of a number equal to or greater than the third threshold value at a certain point in time, the first creation unit 312 creates a user position map based on the position information on the user terminals 2 of the number equal to or greater than the third threshold value collected during a period of time including the certain point in time.

According to this example, by using, through the information processing server 3, position information on user terminals 2 of a number equal to or greater than the third threshold value, it is possible to ensure the precision of the user position map relating to the reliability of the determination result map.

In the above-described embodiment, the first creation unit 312 creates a user position map indicating, in an identifiable manner, the positions of all the user terminals 2 corresponding to the position information on the user terminals 2 collected by the collection unit 311; however, the configuration is not limited thereto. The first creation unit 312 may create a user position map indicating, in an identifiable manner, positions of some of the user terminals 2 corresponding to the position information on the user terminals 2 collected by the collection unit 311.

In this example, the first creation unit 312 compares, with a fourth threshold value, the number of user terminals 2 in each area in which one or more user terminals 2 are positioned. The fourth threshold value is a threshold value for extracting areas with a relatively large number of user terminals 2, the positions of which are indicated in an identifiable manner on the user position map. The fourth threshold value may be either fixed or varied according to the number of user terminals 2 corresponding to the position information used to create the user position map. The first creation unit 312 creates a user position map in such a manner that, in an area in which user terminals 2 of a number equal to or greater than the fourth threshold value are positioned, positions of the user terminals 2 are indicated in an identifiable manner, and in an area in which user terminals 2 of a number less than the fourth threshold value are positioned, positions of the user terminals 2 are not indicated.

The use of the fourth threshold value by the first creation unit 312 is for the purpose of ensuring precision in determining, by the determination unit 314, appropriateness of presentation of each of the areas relating to reliability of the determination result map as an available area for the inhaling device 1. Due to, for example, a delay in updating the permitted area map, there may be a case where an area registered as a permitted area in the permitted area map is actually no longer a permitted area. Also, there is a high possibility that an area with a relatively large number of user terminals 2 in the user position map is actually a permitted area. On the other hand, there is a possibility that an area with a relatively small number of user terminals 2 on the user position map is actually not a permitted area. By creating, through the information processing server 3, a user position map using the fourth threshold value, it is possible to reduce the possibility of determining that it is appropriate to present, as an available area for the inhaling device 1, an area that is no longer a permitted area. Thereby, it is possible to ensure the precision in determining, by the information processing server 3, appropriateness of presentation of each of the areas as an available area for the inhaling device 1.

According to the above-described embodiment, the second creation unit 315 does not indicate, in an identifiable manner, an area determined as inappropriate for presentation as an available area for the inhaling device 1 on the determination result map; however, the configuration is not limited thereto. The second creation unit 315 may create a determination result map indicating areas determined as inappropriate for presentation as available areas for the inhaling device 1, in an identifiable manner differing from the manner in which an area determined as appropriate is indicated. For example, the second creation unit 315 superimposes, on an area determined as inappropriate for presentation as an available area for the inhaling device 1, a second icon indicating that the inhaling device 1 cannot be used.

In an example, the second creation unit 315 indicates, in an identifiable manner on the determination result map, an area determined as inappropriate for presentation as an available area for the inhaling device 1 in relation to a permitted area indicated on the permitted area map by the determination unit 314. It is to be noted that the area determined as inappropriate for presentation as an available area for the inhaling device 1 includes a prohibited area in which all the users are prohibited to use the inhaling device 1 and an area in which only specific users are permitted to use the inhaling device 1.

In another example, the second creation unit 315 indicates, in an identifiable manner on the determination result map, an area determined as inappropriate for presentation as an available area for the inhaling device 1, in relation to a prohibited area indicated on the permitted area map by the determination unit 314, as will be discussed later. In this example, the permitted area map indicates, by means of text information, one or more prohibited areas in addition to a plurality of permitted areas. The text information relating to each of the prohibited areas is linked with positions of one or more prohibited areas on the permitted area map. The prohibited areas may be individually registered in the permitted area map through an input via a terminal (not illustrated). The prohibited areas may be collectively registered in the permitted area map through an input of concrete facility names of the prohibited areas via a terminal (not illustrated). Prohibited areas are collectively registered, for example, in the permitted area map through an input of abstract facility names of the prohibited areas via a terminal (not illustrated). The abstract facility names indicate, for example, facilities in which all the users are prohibited from using the inhaling device 1.

The determination unit 314 determines whether or not each of all the areas in which user terminals 2 are positioned on the user position map corresponds to any of one or more of the prohibited areas indicated on the permitted area map. The determination unit 314 determines that, of a plurality of areas in which user terminals 2 are positioned on the user position map, an area corresponding to the prohibited area indicated on the permitted area map is inappropriate for presentation as an available area for the inhaling device 1. The second creation unit 315 indicates, in an identifiable manner on the determination result map, an area determined as inappropriate for presentation as an available area for the inhaling device 1, in relation to a prohibited area indicated on the permitted area map. For example, the second creation unit 315 indicates, in an identifiable manner on the determination result map, an area corresponding to the prohibited area, of areas determined as inappropriate for presentation as available areas for the inhaling device 1. The second creation unit 315 may not indicate, in an identifiable manner, an area determined as inappropriate for presentation as an available area for the inhaling device 1 on the determination result map in relation to a permitted area indicated on the permitted area map by the determination. The determination unit 314 may indicate, in an identifiable manner on the determination result map, an area in which only specific users are permitted to use the inhaling device 1, in addition to the prohibited area. In this case, the determination unit 314 may indicate an area corresponding to the prohibited area and an area in which only specific users are permitted to use the inhaling device 1 in different manners on the determination result map.

According to this example, the information processing server 3 can explicitly indicate an area in which the inhaling device 1 cannot be used on the determination result map. This example is effective in the case where the determination result map indicates a position of the user terminal 2 together with the first icon and the second icon, similarly to the user position map. The user can easily grasp the prohibited area, regardless of the position of the user terminal 2 which uses the inhaling device 1.

According to the above-described embodiment, the second creation unit 315 creates a determination result map without taking the type of the inhaling device 1 into consideration; however, the configuration is not limited thereto. The second creation unit 315 may create the determination result map while taking the type of the inhaling device 1 into consideration. In the description given herein, it is assumed that there are three type of inhaling device 1.

In this example, the collection unit 311 collects type information on each of a plurality of inhaling devices 1. For example, the collection unit 311 collects type information on each of a plurality of inhaling devices 1 together with the position information based on log information.

The first creation unit 312 creates a user position map according to the type of the inhaling device 1 based on the position information and the type information. For example, the first creation unit 312 creates a user position map associated with an inhaling device 1 of a first type based on the position information associated with the inhaling device 1 of the first type collected by the collection unit 311. Similarly, the first creation unit 312 creates a user position map associated with an inhaling device 1 of a second type and a user position map associated with an inhaling device 1 of a third type.

The first acquisition unit 313 acquires permitted area map information 322. In an example, the permitted area map information 322 is information relating to a permitted area map of each type of inhaling device 1. The permitted area map associated with the inhaling device 1 of the first type indicates a permitted area associated with the inhaling device 1 of the first type. The same applies to the permitted area associated with the inhaling device 1 of the second type and the permitted area associated with the inhaling device 1 of the third type. In another example, the permitted area map information 322 is information relating to a single permitted area map indicating permitted areas for each type of inhaling device 1. The permitted area map indicates a permitted area associated with the inhaling device 1 of the first type, a permitted area associated with the inhaling device 1 of the second type, and a permitted area associated with the inhaling device 1 of the third type.

The determination unit 314 determines, for each type of inhaling device 1, whether or not each of one or more areas on the user position map is appropriate for presentation as an available area for the inhaling device 1. In an example, the determination unit 314 uses a user position map of each type of inhaling device 1 and a permitted area map of each type of inhaling device 1. In another example, the determination unit 314 uses a user position map of each type of inhaling device 1 and a single permitted area map indicating permitted areas for each type of inhaling device 1.

The second creation unit 315 creates, for each type of inhaling device 1, a determination result map indicating, in an identifiable manner, areas determined as appropriate for presentation as an available area for the inhaling device 1. For example, the second creation unit 315 creates, for each type of inhaling device 1, a determination result map on which a first icon is superimposed on the area determined as appropriate for presentation as an available area for the inhaling device 1. In this example, the second creation unit 315 creates a determination result map relating to inhaling devices 1 of the first type, in which a first icon is superimposed on an area determined as appropriate for presentation as an available area for the inhaling devices 1 of the first type. Similarly, the second creation unit 315 creates a determination result map relating to inhaling devices 1 of the second type and a determination result map relating to inhaling devices 1 of the third type. The determination result map of each type of inhaling device 1 may indicate positions of user terminals 2 together with the first icon, similarly to the user position map of each type of inhaling device 1.

Instead, the second creation unit 315 creates a determination result map indicating, in an identifiable manner for each type of inhaling device 1, areas determined as appropriate for presentation as an available area for the inhaling device 1. For example, the second creation unit 315 creates a determination result map on which a first icon associated with the type of inhaling device 1 that can be used is superimposed on the area determined as appropriate for presentation as an available area for the inhaling device 1. In this example, the second creation unit 315 may use, as the first icon, either one of icon A, icon B, icon C, and icon D, which will be described below as an example. The icon A is an icon indicating an area in which only an inhaling device 1 of the first type can be used. The icon B is an icon indicating an area in which an inhaling device 1 of the first type and an inhaling device 1 of the second type can be used. The icon C is an icon indicating an area in which an inhaling device 1 of the first type, an inhaling device 1 of the second type, and an inhaling device 1 of the third type can be used. The icon D is an icon indicating an area in which an inhaling device 1 of the first type, an inhaling device 1 of the second type, and an inhaling device 1 of the third type can be used, and a cigarette can be smoked.

The determination result map may indicate positions of user terminals 2 together with the first icon, similarly to the user position map. The determination result map can indicate, in an identifiable manner, positions of user terminals 2 associated with each type of inhaling device 1. For example, the determination result map may indicate positions of user terminals 2 respectively connected to inhaling devices 1 of the first type in red. The determination result map may indicate positions, and the number at each position of the user terminals 2, respectively connected to inhaling devices 1 of the first type in shades of red. The determination result map may indicate positions of user terminals 2 respectively connected to inhaling devices 1 of the second type in blue. The determination result map may indicate positions, and the number at each position, of user terminals 2, respectively connected to inhaling devices 1 of the second type in shades of blue. The determination result map may indicate positions of user terminals 2 respectively connected to inhaling devices 1 of the second type in green. The determination result map may indicate positions of and the number at each position of user terminals 2 respectively connected to inhaling device 1 of the second type in shades of green.

The second acquisition unit 316 acquires a request for a determination result map from the user terminal 2. For example, a request for the determination result map includes information indicating the type of inhaling device 1. The information indicating the type of inhaling device 1 is suitably selected by the user of the user terminal 2.

Based on the request acquired by the second acquisition unit 316, the transmission unit 317 transmits information relating to the determination result map to the user terminal 2. In an example, the transmission unit 317 transmits, to the user terminal 2 which has transmitted a request to the information processing server 3, the requested determination result map relating to the type of inhaling device 1. In another example, the transmission unit 317 transmits, to the user terminal 2 which has transmitted a request to the information processing server 3, a determination result map indicating the type of inhaling device 1 in an identifiable manner for each type of inhaling device 1.

According to this example, the information processing server 3 can present, to the user, an area in which each type of inhaling device 1 can be used. The user can appropriately grasp an area in which the inhaling device 1 of the type possessed by the user can be used.

According to the above-described embodiment, the control section 31 transmits a determination result map to the user terminal 2; however, the configuration is not limited thereto. The control section 31 may transmit the user position map and the permitted area map to a terminal (not illustrated).

According to this example, a manager of the terminal can grasp a discrepancy between a distribution of user terminals 2 respectively connected to inhaling devices 1 and a distribution of permitted areas, through a comparison between the user position map and the permitted area map displayed on the terminal. For example, if an area in which a large number of user terminals 2 respectively connected to inhaling devices 1 are positioned does not correspond to a permitted area, it is possible to promote an area in which a large number of user terminals 2 respectively connected to inhaling devices 1 are positioned to a permitted area.

The present invention is not limited to the above-described embodiments, and can be modified in various manners in practice during implementation without departing from the gist of the invention. Moreover, the embodiments can be suitably combined; in that case, the combined advantages are obtained. Furthermore, the above-described embodiments include various inventions, and various inventions can be extracted by a combination selected from structural elements disclosed herein. For example, if the object of the invention is achieved and the advantages of the invention are attained even after some of the structural elements disclosed in connection with the embodiments are deleted, the structure made up of the resultant structural elements can be extracted as an invention.

### REFERENCE SIGNS LIST

1a-1n: inhaling device, 2a-2n: user terminal, 3: information processing server, 10: information distribution system, 21: control section, 22: storage section, 23: input section, 24: display section, 25: communication section, 26: detection section, 31: control section, 32: storage section, 33: communication section, 100A: inhaling device, 100B: inhaling device, 110: power-supply unit, 111A: power supply, 111B: power supply, 112A: sensor section, 112B: sensor section, 113A: notification section, 113B: notification section, 114A: storage section, 114B: storage section, 115A: communication section, 115B: communication section, 116A: control section, 116B: control section, 120: cartridge, 121A: heating section, 121B: heating section, 122: liquid guide section, 123: liquid storage section, 124: mouthpiece, 130: flavor-imparting cartridge, 131: flavor source, 140: holding part, 141: internal space, 142: opening, 143: bottom portion, 144: heat-insulating part, 150: stick-shaped base material, 151: base material portion, 152: suction portion, 180: airflow path, 181: air inflow hole, 182: air outflow hole, 190: arrow, 311: collection unit, 312: first creation unit, 313: first acquisition unit, 314: determination unit, 315: second creation unit, 316: second acquisition unit, 317: transmission unit, 321: map information, 322: permitted area map information, 323: log information DB, A1: first area, A2: second area, A3: third area, A4: fourth area, M1: permitted area map, M2: user position map, M3: determination result map, N: network.

## Claims

1. An information processing device comprising:
a collection unit configured to collect, based on each of a plurality of flavor inhalers being activated, position information on a plurality of user terminals respectively connected to the flavor inhalers;
a first creation unit configured to create, based on the position information, a user position map indicating positions of some or all of the user terminals in an identifiable manner;
a determination unit configured to determine whether or not each of one or more areas in which user terminals are positioned is appropriate for presentation as an available area for flavor inhalers on the user position map; and
a second creation unit configured to create a determination result map indicating, in an identifiable manner, an area determined as appropriate for presentation as an available area for flavor inhalers.

2. The information processing device according to claim 1, wherein
the determination unit is configured to determine whether or not each of the one or more areas in which user terminals of a number equal to or greater than a threshold value are positioned on the user position map is appropriate for presentation as an available area for flavor inhalers.

3. The information processing device according to claim 1 or 2, further comprising:
an acquisition unit configured to acquire information relating to a permitted area map indicating a plurality of permitted areas in which use of flavor inhalers is permitted, wherein
the determination unit is configured to determines, based on the user position map and the permitted area map, whether or not each of the one or more areas on the user position map is appropriate for presentation as an available area for flavor inhalers.

4. The information processing device according to claim 3, wherein
the determination unit is configured to superimpose the user position map and the permitted area map, and determine whether or not each of the one or more areas on the user position map is appropriate for presentation as an available area for flavor inhalers, according to whether or not each of the one or more areas on the user position map corresponds to any of the permitted areas indicated on the permitted area map.

5. The information processing device according to any one of claims 1 to 4, wherein
the second creation unit is configured to create the determination result map in such a manner that an area determined as inappropriate for presentation as an available area for flavor inhalers is indicated in an identifiable manner differing from a manner in which an area determined as appropriate is indicated.

6. The information processing device according to any one of claims 1 to 5, wherein
the first creation unit is configured to create the user position map based on the position information of user terminals of a number equal to or greater than a threshold value collected by the collection unit.

7. The information processing device according to any one of claims 1 to 6, wherein
the first creation unit is configured to create the user position map based on the position information collected by the collection unit during a period of time with a length that is set differently according to a time zone.

8. The information processing device according to any one of claims 1 to 7, wherein
the first creation unit is configured to compare, with a threshold value, a number of user terminals in each area in which one or more user terminals are positioned, and create the user position map in such a manner that, in an area in which user terminals of a number equal to or greater than the threshold are positioned, positions of user terminals are indicated in an identifiable manner, and in an area in which user terminals of a number less than the threshold value are positioned, positions of user terminals are not indicated.

9. The information processing device according to any one of claims 1 to 8, wherein
the collection unit is configured to collect type information on each of the flavor inhalers,
the first creation unit is configured to create, based on the position information and the type information, the user position map for each type of flavor inhaler,
the determination unit is configured to determine, for each type of flavor inhaler, whether or not each of the one or more areas on the user position map is appropriate for presentation as an available area for flavor inhalers, and
the second creation unit is configured to create, for each type of flavor inhaler, a determination result map indicating, in an identifiable manner, an area determined as appropriate for presentation as an available area for flavor inhalers.

10. The information processing device according to any one of claims 1 to 9, wherein
the collection unit is configured to collect type information on each of the flavor inhalers,
the first creation unit is configured to create, based on the position information and the type information, the user position map for each type of flavor inhaler,
the determination unit is configured to determine, for each type of flavor inhaler, whether or not each of the one or more areas on the user position map is appropriate for presentation as an available area for flavor inhalers, and
the second creation unit is configured to create a determination result map indicating, in an identifiable manner, an area determined as appropriate for presentation as an available area for flavor inhalers.

11. An information processing method comprising:
a collection step of collecting, based on each of a plurality of flavor inhalers being activated, position information on a plurality of user terminals respectively connected to the flavor inhalers;
a first creation step of creating, based on the position information, a user position map indicating some or all of the user terminals in an identifiable manner;
a determination step of determining whether or not each of one or more areas in which user terminals are positioned is appropriate for presentation as an available area for flavor inhalers on the user position map; and
a second creation step of creating a determination result map indicating, in an identifiable manner, an area determined as appropriate for presentation as an available area for the flavor inhalers.

12. The information processing method according to claim 11, wherein
the determination step includes determining whether or not each of the one or more areas in which user terminals of a number equal to or greater than a threshold value are positioned on the user position map is appropriate for presentation as an available area for the flavor inhalers.

13. The information processing method according to claim 11 or 12, further comprising:
an acquisition step of acquiring information relating to a permitted area map indicating a plurality of permitted areas in which use of the flavor inhalers is permitted, wherein
the determination step includes determining, based on the user position map and the permitted area map, whether or not each of the one or more areas on the user position map is appropriate for presentation as an available area of the flavor inhaler.

14. The information processing method according to claim 13, wherein
the determination step includes determining, based on whether or not each of the one or more areas on the user position map corresponds to any of the permitted areas indicated on the permitted area map, whether or not each of the one or more areas on the user position map is appropriate for presentation as an available area for flavor inhalers.

15. A program for causing a computer to realize:
a collection unit configured to collect, based on each of a plurality of flavor inhalers being activated, position information on a plurality of user terminals respectively connected to the flavor inhalers;
a first creation unit configured to create, based on the position information, a user position map indicating some or all of the user terminals in an identifiable manner;
a determination unit configured to determine whether or not each of one or more areas in which user terminals are positioned is appropriate for presentation as an available area for flavor inhalers, on the user position map; and
a second creation unit configured to create a determination result map indicating, in an identifiable manner, an area determined as appropriate for presentation as an available area for flavor inhalers.
